Europäisches Patentamt

European Patent Office

Office européen des brevets

(11) Veröffentlichungsnummer: **0 475 035 A2**

## (12) EUROPÄISCHE PATENTANMELDUNG

(21) Anmeldenummer: **91112417.0**

(22) Anmeldetag: **24.07.91**

(51) Int. Cl.5: **H04N 9/64**, H04N 9/74

(30) Priorität: **14.09.90 DE 4029163**

(43) Veröffentlichungstag der Anmeldung:
**18.03.92 Patentblatt 92/12**

(84) Benannte Vertragsstaaten:
**AT CH DE FR GB IT LI SE**

(71) Anmelder: **GRUNDIG E.M.V.**
**Elektro-Mechanische Versuchsanstalt Max**

Grundig holländ. Stiftung & Co. KG.
Kurgartenstrasse 37
W-8510 Fürth/Bay.(DE)

(72) Erfinder: **Triebel, Siegbert, Gründig E.M.V.,**
**Elektro-Mech.**
**Versuchsanstalt Max Grundig holländ Stift. &**
**Co KG**
**Kurgartenstrasse 37, W-8510 Fuerth(DE)**

(54) **Anordnung für die Darstellung von alphanumerischen Zeichen auf einem Fernsehbildschirm.**

(57) Die Erfindung bezieht sich auf eine Anordnung zum mehrfarbigen Darstellen von alphanumerischen Zeichen auf einem Fernsehbildschirm zusammen mit Farbfernsehbildern als Hintergrund.

Zur Verbesserung der Lesbarkeit der dargestellten Zeichen wird deren Farbton abhängig vom Farbton des Fernsehbildhintergrundes eingestellt.

Die Anordnung ist insbesondere für die Darstellung von alphanumerischen Zeichen aus dem Fernsehtextangebot zur Untertitelung laufender Programmbeiträge anwendbar.

Fig.1

Die Erfindung bezieht sich auf eine Anordnung zum Darstellen von alphanumerischen Zeichen auf einem Fernsehbildschirm, mittels der die Zeichen in unterschiedlichen Farben generierbar sind und mittels der außer den Zeichen gleichzeitig auch mehrfarbige oder schwarz-weiße Fernsehbilder darstellbar sind.

Der Telekommunikationsdiest Fernsehtext macht es möglich, mit Hilfe eines Fernsehgerätes zusätzlich zu den üblichen Fernsehbildern auch Zeichen darzustellen. Unter Zeichen werden in diesem Zusammenhang insbesondere alphanumerische Zeichen verstanden, die in einem laufenden Fernsehprogramm eingeblendet werden.

Bei der Darstellung der Zeichen wird der ganze Bildschirminhalt als Seite bezeichnet und beispielsweise in 24 Zeilen mit jeweils 40 Zeichen eingeteilt. Das Zeichenfeld kann aus 5x9 Bildpunkten bestehen, mit denen die einzelnen Zeichen dargestellt werden. Die Darstellung der Zeichen kann in den beim Fernsehen üblichen Primärfarben rot, grün und blau und deren Komplementärfarben gelb, cyan und magenta sowie in weiß und schwarz erfolgen. Den prinzipiellen Aufbau eines solchen Fernsehtextsystems gibt z. B. die Zeitschriftenserie "Videotext und Bildschirmtext" aus der Zeitschrif Funkschau wieder (Jahrgang 1988, Hefte 6 - 9, Arbeitsblätter).

Die DE-OS 37 23 590 gibt eine Schaltung an, welche die Zusammensetzung einer Gesamtbildinformation aus Einzelbildern ermöglicht. Dabei wird den Einzelbildern, welche Bildinformation, graphische Daten und Daten in Form von alphanumerischen Zeichen enthalten, eine Reihenfolge oder Priorität zugewiesen, in der sie zu der Gesamtbildinformation zusammengestzt werden, wobei Bildstellen (Pixel) höherer Priorität ein Transparenzzeichen zugeordnet wird, wenn Stellen aus Bildinhalten mit niedrigerer Priorität im zusammengesetzten Bild sichtbar sein sollen. Bei der Darstellung der alphanumerischen Zeichen im zusammengesetzten Bild kann das Problem auftreten, daß die Bildinformation, die die alphanumerischen Zeichen umgibt, einen sehr geringen Kontrast zu den Zeichen aufweist. In diesen Fällen ist die Lesbarkeit der dargestellten alphanumerischen Zeichen sehr schlecht.

Einen Lösungsansatz zeigt die DE-OS 31 12 249, die die Darstellung von mehrfarbigen alphanumerischen Zeichen mit wählbarer Hintergrundfarbe für das Zeichenfeld erlaubt und bei der eine Steuereinheit vorgesehen ist, die bei der Darstellung von Zeichen mit verhältnismäßig dunklen Farben eine Aufhellung dieser Farben relativ zu den darstellbaren, verhältnismäßig hellen Farben bewirkt.

Als nachteilig bei dem bekannten Verfahren ist anzusehen, daß gute Lesbarkeit der alphanumerischen Zeichen für den Fall erreicht wird, daß der Hintergrund der Zeichen in einer gut kontrastierenden Farbe gewählt wird, wodurch aber ein Teil der Bildinformation des überblendeten Fernsehbilds verloren geht. Für den Fall, daß die alphanumerischen Zeichen ohne gleichförmigen Hintergrund für das Zeichenfeld in das Fernsehbild eingeblendet werden und die Lesbarkeit der Zeichen durch die relative Aufhellung derselben verbessert werden soll, ist dies nur dann befriedigend möglich, wenn alphanumerische Zeichen und Fernsehbildhintergrund in ausreichend kontrastierenden Farben dargestellt sind.

Einen weiteren Lösungsansatz zur Verbesserung der Lesbarkeit der alphanumerischen Zeichen gibt die DE-OS 32 40 473 an. Zur Darstellung von farbigen Fernsehtextinformationen soll ein monochromer, grautonfähiger Bildschirm, beispielsweise ein Datenterminal, verwendet werden. Bei der Umsetzung der farbigen Fernsehtextinformationen in Grautöne, zur Darstellung auf dem monochromen Bildschirm, besteht jedoch die Gefahr, daß die Sichtbarkeit der Darstellungen darunter leidet, da sich u.U. die Grautonwerte der Farben zu wenig unterscheiden. Die Erkennbarkeit der dargestellten Information wird durch eine Schaltungsanordnung erreicht, welche benachbarte Bildpunkte auf das Vorliegen eines Farbübergangs überprüft und bei einem Farbübergang die betreffenden benachbarten Bildpunkte in Grautonwerten auf dem Bildschirm abgebildet werden, welche sich ausreichend voneinander abheben.

Als nachteilig bei dem bekannten Verfahren ist anzusehen, daß gute Lesbarkeit der alphanumerischen Zeichen nur für den Fall erreicht wird, daß ausschließlich Fernsehtextinformation auf dem monochromen Bildschirm dargestellt wird, also ohne die gleichzeitige Darstellung von Fernsehbildern als Hintergrund.

Der Erfindung liegt daher die Aufgabe zugrunde, eine Anordnung anzugeben, mittels der eine besonders gute Lesbarkeit von Zeichen mit unterschiedlichem Farbton zum Hintergrund auf einem Bildschirm einer Anzeigeeinheit erreicht wird.

Erfindungsgemäß wird die Aufgabe bei der Anordnung der eingangs genannten Art dadurch gelöst, daß eine Schalteinheit vorgesehen ist, die bei der Darstellung von alphanumerischen Zeichen den Farbton der Zeichen abhängig vom Hintergrundfarbton einstellt.

Die Anordnung gemäß der Erfindung hat den Vorteil, daß sie ohne weiteres in vorhandene Anzeigeeinheiten eingebaut werden kann. Für den Betrachter erscheint ein untertiteltes Bild, bei dem wegen des Farbkontrastes zwischen Hintergrund und alphanumerischen Zeichen diese immer gut lesbar sind.

Im folgenden wird eine vorteilhafte Ausführungsform der Anordnung gemäß der Erfindung anhand einer Zeichnung näher beschrieben. Es zeigt:

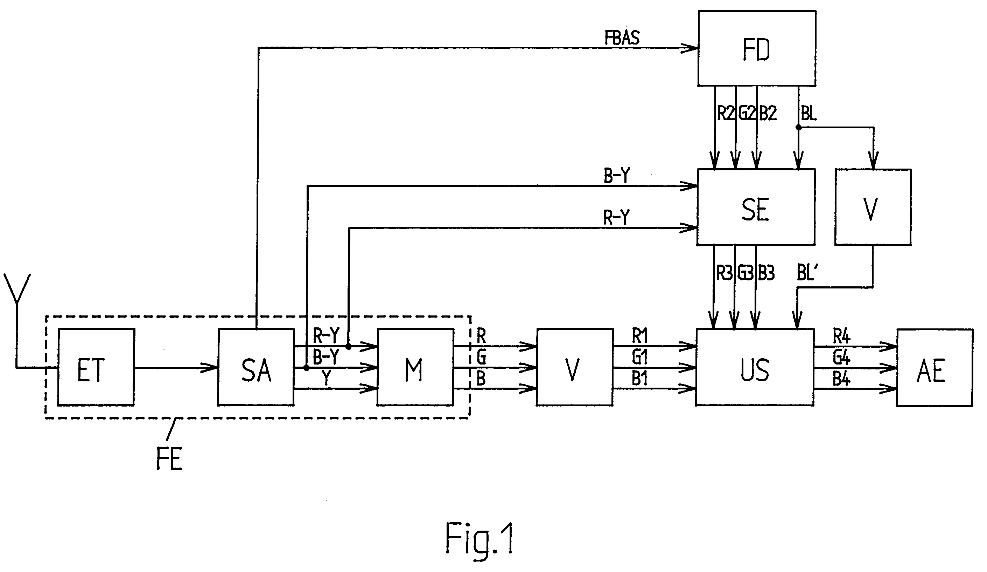

Fig.1 eine Ausführungsform der Anordnung.

Bei dem in Fig.1 dargestellten Blockschaltbild handelt es sich um eine Ausführungsform der Anordnung zum Darstellen von Zeichen auf einem Bildschirm.

Das Blockschaltbild zeigt einen Fernsehempfänger FE, der sich aus einem Empfänger ET, einer Schaltung zur Signalaufbereitung SA und einer Matrixschaltung M zur Bildung der Primärfarbsignale R, G und B zusammensetzt. Der Fernsehempfänger FE ist in bekannter Weise aufgebaut. Bekannte und in Fernsehgeräten mit der Möglichkeit Fernsehtext darzustellen üblicherweise vorhandene Bestandteile sind außerdem der Fernsehtextdecoder FD, der Umschalter US, welcher zwischen darzustellendem Fernsehbild und Fernsehtextinformation umschaltet und die Anzeigeneinheit AE, die unter anderem den Bildschirm enthält.

Zur gleichzeitigen Darstellung der alphanumerischen Zeichen und des Fernsehbildes auf dem Bildschirm der Anzeigeeinheit AE schaltet der Umschalter US wahlweise die Bildinformation des Fernsehbilds R, G, B oder die im Fernsehtextdecoder FD erzeugte Bildinformation R2, G2, B2 auf die Anzeigeeinheit AE. Ob Fernsehbild oder Textinformation durch die Anzeigeeinheit AE dargestellt werden soll wird durch den Fernsehtextdecoder FD entschieden. Dieser generiert für alle Stellen (Pixel) des Bildes, die zu alphanumerischen Zeichen gehören, ein Steuersignal BL. Das Steuersignal BL betätigt die Schalteinheit SE und den Umschalter US. Die Verzögerungsglieder V gleichen die in der Schalteinheit SE an den Signalen R3, G3, B3 (aus R2, G2, B2 gebildet) entstandene Verzögerung bei den Signalen R, G, B und BL aus, so daß im Umschalter US die Umschaltung zwischen Bildinformation und Textinformation für die korrekten Bildstellen (Pixel) erfolgen kann. In der Schalteinheit SE werden die vom Fernsehempfänger FE gelieferten Farbdifferenzsignale R-Y und B-Y, die den Farbton des Fernsehbildes charakterisieren, ausgewertet und der Farbton der vom Fernsehtextdecoder FD kommenden alphanumerischen Fernsehtextzeichen R2, G2, B2 wird von der Schalteinheit SE so eingestellt, daß für die alphanumerischen Zeichen ein guter Farbkontrast zum jeweiligen Fernsehbildhintergrund entsteht. Es kann beispielsweise ein zum Fernsehbildhintergrund komplementärer Farbton für die darzustellenden alphanumerischen Zeichen eingestellt werden, vorzugsweise mit voller Farbsättigung.

In der Schalteinheit SE wird außerdem festgestellt, ob das aktuell darzustellende Fernsehbild ein Farbbild oder ein Schwarz-Weiß-Bild ist. Dazu wird aus den Farbdifferenzsignalen R-Y und B-Y die Amplitude des Farbartsignals gebildet und mit einem vorgegebenen Schwellwert verglichen, bei dessen Unterschreiten ein Schwarz-Weiß-Bild vorliegt. Handelt es sich um ein Schwarz-Weiß-Bild, so werden die alphanumerischen Zeichen in einer voreingestellten Primärfarbe mit dem Schwarz-Weiß-Bild als Hintergrund dargestellt. Die Methode des Vergleichs der Amplitude des Farbartsignals mit einem vorgegebenen Schwellwert zur Feststellung der Farblosigkeit der Fernsehbilder liefert bessere Ergebnisse als die sonst verwandte Methode der Detektion des Farb-Burst-Signals, da häufig auch Schwarz-Weiß-Sendungen mit Farb-Burst-Signalen ausgesendet werden, bzw. auch Farbsendungen einzelne Schwarz-Weiß-Bilder aufweisen können.

## Patentansprüche

1. Anordnung zum Darstellen von alphanumerischen Zeichen auf dem Bildschirm einer Anzeigeeinheit (AE), mittels der die Zeichen in unterschiedlichen Farben von einem Zeichengenerator im Fernsehtextdecoder (FD) generiert werden, um diese mit üblichen farbigen Fernsehbildern als Hintergrund gleichzeitig auf dem Bildschirm der Anzeigeeinheit (AE) lesbar darzustellen,
**dadurch gekennzeichnet**,
daß eine Schalteinheit (SE) den Farbton der generierten alphanumerischen Zeichen so einstellt, daß die alphanumerischen Zeichen farblich gut zum zeitgleich dargestellten Fernsehbildhintergrund kontrastieren, wobei die Schalteinheit (SE) den Farbton für die generierten alphanumerischen Zeichen aufgrund eines Vergleichs mit den Farbdifferenzsignalen (B-Y, R-Y) des Fernsehbildhintergrundes festlegt.

2. Anordnung nach Anspruch 1,
**dadurch gekennzeichnet**,
daß die Schalteinheit (SE) den Farbton für die darzustellenden Zeichen komplementär zum Farbton des Fernsehbildhintergrundes festlegt.

3. Anordnung nach Anspruch 1,
**dadurch gekennzeichnet**,
daß die Schalteinheit (SE) die aus den Farbdifferenzsignalen (B-Y, R-Y) resultierende Amplitude des Farbartsignals des Fernsehbildhintergrundes auswertet und bei Unterschreitung einer vorgegebenen Amplitudenschwelle erkennt, daß der vorliegende Fernsehbildhintergrund ein Schwarz-Weiß-Bild darstellt.

4. Anordnung nach den Ansprüchen 1 und 3,
**dadurch gekennzeichnet**,
daß für einen Fernsehbildhintergrund, der ein Schwarz-Weiß-Bild darstellt, die Schalteinheit (SE) für die Darstellung der Zeichen eine Primärfarbe (rot, grün, blau) oder deren Komplementärfarbe (gelb, cyan, magenta) auswählt.

5. Anordnung nach einem oder mehreren der Ansprüche 1 bis 4,
**dadurch gekennzeichnet**,
daß die Schalteinheit (SE) die Farbsättigung der darzustellenden alphanumerischen Zeichen auf den Maximalwert einstellt.

6. Anordnung nach einem oder mehreren der Ansprüche 1 bis 4,
**dadurch gekennzeichnet**,
daß in der Schalteinheit (SE) die Farbsättigung der darzustellenden alphanumerischen Zeichen eingestellt werden kann.

7. Anordnung nach einem oder mehreren der vorhergehenden Ansprüche,
**dadurch gekennzeichnet**,
daß die darzustellenden Zeichen Untertitel für ein laufendes Fernsehprogramm sind und in der vertikalen Austastlücke des laufenden Fernsehprogramms im Fernsehtext-Zeichensatz übertragen werden.

Fig.1

EP 0 475 035 A2